# EUROPEAN PATENT SPECIFICATION

(11) **EP 4 409 156 B1**
(45) Date of publication and mention of the grant of the patent: **26.11.2025**
(21) Application number: 21789868.3
(22) Date of filing: 01.10.2021
(51) Int. Cl.: F16F 7/104, E01B 19/00

(54) **VIBRATION DAMPER FOR RAILWAY TRACKS AND A METHOD OF MANUFACTURING THEREOF**
SCHWINGUNGSDÄMPFER FÜR EISENBAHNGLEISE UND VERFAHREN ZU DESSEN HERSTELLUNG
AMORTISSEUR DE VIBRATIONS POUR VOIES FERRÉES ET SON PROCÉDÉ DE FABRICATION

(43) Date of publication of application: 07.08.2024
(73) Proprietor: ArcelorMittal, 1160 Luxembourg (LU)
(72) Inventor: FUENMAYOR FERNANDEZ, Francisco Javier, 46022 Valencia (ES); CARBALLEIRA MORADO, Javier, 46022 Valencia (ES); ALVAREZ DIEZ, David, 33402 Avilés Asturias (ES); MANZANO PALACIOS, Diego, 33402 Avilés Asturias (ES); GALAN RIVERA, Daniel Ramón, 33402 Avilés Asturias (ES); BAEZA GONZALEZ, Luis, 46022 Valencia (ES); DENIA GUZMAN, Francisco David, 46022 Valencia (ES)
(74) Representative: Lavoix
(86) International application number: PCT/IB2021/059045
(87) International publication number: WO 2023/052828

(56) References cited:
- EP-A1- 0 628 660
- WO-A1-2015/003634
- WO-A1-99/15732
- CN-A- 109 112 909
- CN-A- 112 252 089
- GB-A- 771 663

## Description

The present invention relates to a rail noise reduction member capable of suppressing generation of noise from rails caused by running of a railroad vehicle and particularly to the tuned mass dampers for railway tracks which is suitable for reducing the vibration of the rails.

In a railway, a vehicle travels on the rail, generating noise and vibrations due to the contact between the rail and wheel and in high-speed railways and subways generated noise and vibration has other large number of sources also. The sources include wind noise of pantographs, sliding noise of overhead lines and pantographs, unevenness of vehicle body surfaces, and vehicles. There are high-speed turbulent noise coming from the irregularities of the lower suction, and noise from motors, brakes etc. Conventionally, the noise caused by the traveling of the railway has been accepted from the viewpoint of social public interest.

In particular, in relation to the rails and wheels, the wheels always make a hammer ring on the rail while travelling, producing impact and noise. In addition, the higher the speed and the weight of the load, the greater the impact and noise of the hammer ring. It is the largest source of noise and vibrations on railways.

The noise emitted by moving rail vehicles is a major limitation on their use, in that it will limit the ability of operators to install new lines in populated areas and will limit speeds and traffic volumes on existing lines. The noise tends to be dominated by rolling noise from the wheel/rail interface, which is caused partly by vibration of the wheels and partly by vibration of the track.
The vibration of the railway track can be approached by means of waves that propagate through the rails. Each wave has a wavelength and this fact is key in order to determine its decay rate as well as how the wave amplitude attenuates along the rail. The longer the section of rail that vibrates for each wheel, the more noise is radiated; therefore, it is important to damp the waves that are energised in the wheel/rail contact in order to reduce the rail noise radiation. The wavelengths that coincide with twice the sleeper bay distance (and divisors), produce nodes at the sleeper positions and consequently, the vibration energy cannot be transferred to the ballast (which is the main damper or energy 'drain' in the track). The frequencies of these important waves are called pinned-pinned frequencies, and they are associated with high vibration level in the rails, rolling noise and corrugation (wavy wear of the rail running surface). A basic purpose of a tuned mass damper (TMDs) for railway track applications is reducing the pinned-pinned response of the track. The device can be considered as a damper since it has the capacity to increase the damping of the track and its decay rate.
The pinned-pinned vibration mainly involves deformation of the steel rail, and steel is a material that has a low-damped linear behaviour. Although the dynamics of the track is complex (due to the non-linear characteristics of the ballast and the rail pads, among others), the pinned-pinned frequencies depend basically on the rail section and the sleeper bay distance. All these facts make that the pinned-pinned frequencies can be calculated from the rail properties, and they are quite independent of factors such as temperature.

Therefore, intense Research and development endeavors are put in to reduce the amount of material and the damper that would be able to absorb vibration and hence reduce noise would be unable to survive in use for any appreciable time. Resilient rail fastenings have been employed to reduce track forces and thereby reduce component damage and structure-borne noise. However, they have an adverse effect on track noise, as they tend to reduce the attenuation of rail vibration.

EP 628,660 A1 discloses a rail bar in which a body of high specific mass is arranged within a mouldable material of low specific mass.

WO99/15732 discloses a rail damper adapted to absorb a wide range of resonant frequencies in the rail through the use of a damper with resonant members tuned to two frequencies in the spectrum of noise to be absorbed.

Document CN 112 252 089 A discloses a relevant rail damper for mounting on rail track to dampen the vibrations, comprising a damper casing having first end, second end and inner wall.

Other publication that also demonstrate the similar concept for the dampers are:
M. Dumitriu, I. C. Cruceanu, On the Rolling Noise Reduction by Using the Rail Damper, Journal of Engineering Science and Technology Review 10 (6) (2017) 87-95.
L. Zoontjens, L. Welsh, B. Croft, Predicting and managing rolling noise emissions from trains on the Perth metro passenger rail network, Proceedings of ACOUSTICS 2017, Perth, Australia*.*

In the mentioned publication the rail damper shows a design based on the concept of damped oscillator. In these designs, there are two parts or components: (A) one member that stores kinetic energy (which is a stiff and dense body, made of steel bars or sheets); (B) one part that stores elastic energy (which is made of a deformable material). The deformable part (B) must also have the ability to introduce damping. Rubber has about ten times more damping than steel, which is important in relative terms, but not in absolute terms. The damping of rubber is much less than that of hydraulic shock absorbers, for example. Rubber is a material with complex properties due to its hyper-elasticity, to the dependence of stiffness on frequency and, above all, to the dependence of the material stiffness on temperature. These issues make it difficult to design with rubber and make it impossible to maintain the mechanical properties of the dampers when the temperature ranges from below zero to more than 50 degrees Celsius.

For the foregoing reasons, there is a need for a system and a method that overcomes or mitigates one or more of the disadvantages or defects of the prior art. Such disadvantages or defects are not necessarily included in those described above.

The purpose of the present invention is to solve these problems by making available a rail damper that can dampen the amplitude of the vibrations below 0.40g/N when measured at a frequency between 1900 and 2100Hz, independently of the temperature.

In a preferred embodiment the rail damper may attenuate the noise generated by the resonant element itself.

Another object of the present invention is also to make available a method for the manufacturing of these dampers that is compatible with conventional industrial applications while being robust towards manufacturing parameters shifts.

Other characteristics and advantages of the invention will become apparent from the following detailed description of the invention:
The present invention has the function of introducing damping in the rail, in order to reduce the problems associated with a high vibration level of the rail, such as rolling noise and certain types of corrugation. The following is a general description of the invention.

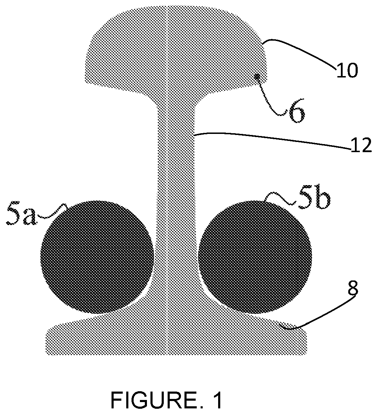

Figure 1 presents a schematic representation of an embodiment of the pair of rail dampers (5a and 5b) mounted on a rail track (6). The said pair of rail dampers (5a and 5b) can be mounted on the rail tracks by any know means of fixation such as nut bolt, welding, glue or screw fastening etc. The said pair of rail dampers (5a and 5b) can be mounted on the rail track (6) anywhere on the rail web (12) between the foot (8) and head (10) of the rail (6). Figure 1 represents the pair of rail dampers in a round section design which under scope of present invention must not be construed as exhaustive. The cross section of the pair of rail dampers (5a and 5b) can be of any shape or contour, for example rectangular section design, square section design or triangular section design or any other like shape.

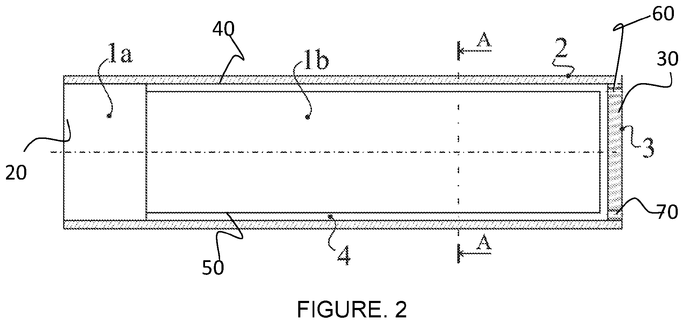

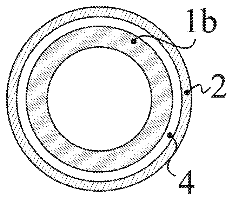

Figure 2 is an axial section view of any one of the rail dampers (5a or 5b) for a rail track (6) according to a preferred embodiment of the present invention. Hereinafter the reference to the rail damper refers to any of the rail dampers from the pair of rail dampers (5a and 5b).

In figure 2, the rail damper (5a or 5b) comprises a cylindrical damper casing (2) having first (20) and second (30) axial ends respectively, defined by axis (A-A) and inner walls (40). The first end (20) of the cylindrical damper casing (2) is closed with a concentric solid cylindrical member (1a) by press-fitting or any other like method to hermitically seal the said first end (20) of the cylindrical casing (2).
The said concentric solid cylindrical member (1a) is fitted with a smaller diameter concentric cylindrical member (1b). The diameter of the smaller diameter concentric cylindrical member (1b) is of course always smaller than the cylindrical damper casing (2) in order to form fluid chamber (4) to receive a fluid. The fluid within the scope of present invention means any fluid that has a viscosity from 1*10⁻⁵ to 1* 10² Pa*s when measured at room temperature. The fluid chamber (4) is defined by the inner walls (40) of cylindrical damper casing (2) and the outer walls (50) of the smaller diameter concentric cylindrical member (1b) and is filled with said fluid.

The second end (30) of the cylinder casing (2) is closed by a cap (3) such that the cap (3) is fastened in a releasable way to the second end (30) of the cylinder casing (2) in a leak-proof manner wherein the cap (3) may be fastened to the second end (30) of the cylinder casing (2) by interference fit, welding, glue, grove fit or any other like means. The cap (3) can optionally have resealable holes (60, 70) for easier access to monitor the condition of viscosity and to replenish or drain out the fluid.

Figure 3 is a cross-section view cut along the axis A-A for any one of the rail damper (5a or 5b) for a rail track (6) according to a preferred embodiment of the present invention.

Figure 3 shows a rail damper (5a or 5b) comprising a cylindrical damper casing (2) with inner walls (40). Further figure 3 also shows the solid cylindrical member (1a) hermitically sealing the said first end (20) of the cylindrical casing (2).

Figure 3 also shows the smaller diameter concentric cylindrical member (1b) and fluid chamber (4) and the outer walls (50) of the smaller diameter concentric cylindrical member (1b). It is preferred that the smaller diameter concentric cylindrical member (1b) is hollow and in another preferred embodiment the smaller diameter concentric cylindrical member (1b) may be solid cylindrical bar.

The operation of rail damper (5a or 5b) configured as described above will now be described.

Vibration generated by the trains are transmitted to the rail tracks thorough the wheels-rail contact. The the wheels-rail contact transmits the vibrations of trains which are in frequency range from 0 Hz to around 5 kHz to the rail track by generating the vibration through the rail track (6) which are in range from 100 Hz to 1 kHz approximately measured from first pinned-pinned frequency manifestation. Thereafter these vibrations from the rail track are transmitted to rail damper (5a and 5b) for dampening. The rail damper (5a or 5b) receives these vibration through the cylindrical casing (2) and then transmits it further to the solid cylindrical member (1a) to reach the resonant element that is the smaller diameter concentric cylindrical member (1b) which is fixed to solid cylindrical member (1a).

The rail damper (5a or 5b ) of the present invention uses a single piece resonant element that is the smaller diameter concentric cylindrical member (1b) immersed in the fluid present in the fluid chamber (4) that simultaneously provides the necessary inertial and elastic properties to dampen vibration as well as the noise transmitted from the trains.

The use of such single resonant element for dampening the vibrations eliminates use of multiple resonant elements in a rail damper thereby providing stable dampening. The dampening of the vibration and noise is provided by allowing the resonant element to absorb energy of the vibration received from rail track via the cylinder casing (2) and (1a) then dissipating the energy of vibrations in the fluid present in the fluid chamber (4), thereafter allowing the vibrations to decay in said fluid.

Further the present invention also attenuates the noise radiated by the resonant element itself. When the resonant element (1b) comes into resonance, it can constitute the main source of noise. The present invention encapsulates the resonant element (1b) inside a cylindrical casing with the fluid that provides sufficient acoustic impedance to avoid this problem.

The smaller diameter concentric cylindrical member (1b) is a resonant member whose first characteristic frequency is determined by its stiffness and mass properties of the material it is made of. The smaller diameter concentric cylindrical member (1b) material must be selected so that its properties are stable and consequently, its first characteristic frequency is stable and independent of temperature. The preferred material for the smaller diameter concentric cylindrical member (1b) is steel. Damping capacity of the resonant member is increased according to the present invention when it is immersed in a fluid (4) of moderate to high viscosity because this allows the present invention to maintain stable decay of vibrations regardless of temperature due to reason that the fluid present in the fluid chamber (4) maintains constant viscosity parameter over a very wide range of temperatures, specifically between -5°C and 50°C. The preferred fluid are multi-grade greases or oils or any other like fluid having viscosity 1*10⁻⁵ to 1* 10² Pa*s when measured at room temperature.

The vibration damping behaviour of the track is modified according to the following pattern:
a) If the frequency at which the rail vibrates is sufficiently higher than the characteristic frequency of the resonant member, the displacement of the resonant member is negligible, so a viscous force is transferred between the resonant member and the rail. This force increases the damping of the track.
b) If the frequency at which the rail vibrates is close to the characteristic frequency of the resonant member, the resonant member is in resonance. The vibration energy is transferred from the track to the resonant member. The vibration of the track is attenuated.
c) If the frequency at which the rail vibrates is lower than the characteristic frequency of the resonant member, the device object of the invention does not significantly modify the response of the track.

### EXAMPLES:

The following tests, examples, figurative exemplification and results which are presented herein are non-restricting in nature and must be considered for purposes of illustration only and will display the advantageous features of the present invention.

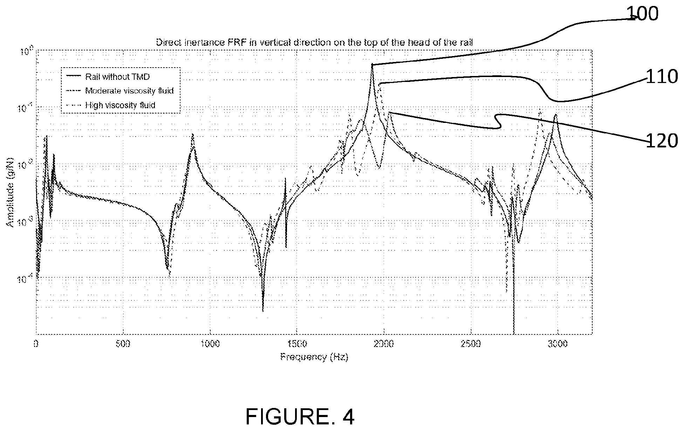

In tests carried out, the application of the device has shown its ability to reduce the vibratory response. In these experiments, the device was fixed on a rail sample that is supported by soft supports. The position of the device on the rail sample was determined in order to cancel the response of a target rail mode which is at 1950 Hz. In the inertance frequency response function measurements that were performed see figure 4, they show that the device has the ability to reduce the mode response by up to 10 times, depending on the type of fluid that the device contains inside. The performance of the device when applied on a railway track increases if the rail is the main cause of noise with respect to other factors (wheel or sleeper noise, squeals or other sources due to equipment that the vehicles mount).

Figure 4 shows a graph that demonstrate the results of the test conducted as mentioned herein above. The point designated as 100 shows the damping without the damper of present invention which is at 0.5817g/N when measured at 1932Hz and the point designated as 110 shows the results of for the damper according to the present invention which is at 0.2774g/N when measured at 1973Hz. Hence from the figure 4 it is apparently clear that the present invention is able to dampen the amplitude of the vibration nearly to half. High and moderate viscosity fluids 1 and 2 had a viscosity from 1*10⁻⁵ to 1* 10² Pa*s.

The table herein shows the test results conducted as per above mentioned condition:

| Type of Rail Damper | Amplitude g/N | Frequency of Measurement | Designation on Figure 4 |
|---|---|---|---|
| Rail Track without present invention | 0.5817 g/N | 1932 Hz | 100 |
| High Viscosity fluid 1 | 0.2774 g/N | 1973 Hz | 110 |
| Moderate Viscosity fluid 2 | 0.0824 g/N | 2034 Hz | 120 |

## Claims

1. A rail damper (5a, 5b) for mounting on rail track (6) to dampen the vibrations, comprising:
- a cylindrical damper casing (2) having first end (20), second end (30) and inner wall (40);
- a solid cylindrical member (1a) closing the said first end (20) of said cylindrical damper casing (2) wherein said solid cylindrical member (1a) is attached a smaller diameter concentric cylindrical member (1b) having an outer wall (50) in order to form a fluid chamber (4) between said inner wall (40) of said cylindrical damper casing (2) and said outer wall (50) to receive a fluid;
- a cap (3) closing said second end (30) of the cylinder casing (2), the cap (3) being attached in a resealable way to said second end (30) of the cylinder casing (2) in a leak-proof manner.

2. A rail damper (5a, 5b) as claimed in claim 1, wherein said smaller diameter concentric cylindrical member (1b) is immersed in the fluid contained in the fluid chamber (4) constituting a resonant element of the rail damper (5a, 5b).

3. A rail damper (5a, 5b) as claimed in anyone of claims 1 or 2, where said smaller diameter concentric cylindrical member (1b) is a solid bar or a hollow tube.

4. A rail damper (5a, 5b) as claimed in anyone of claims 1 to 3, wherein said fluid has a viscosity from 1*10⁻⁵ to 1* 10² Pa*s when measured at room temperature.

5. A rail damper (5a, 5b) as claimed in anyone of claims 1 to 4, wherein said cap (3) has resealable holes (60, 70).

6. A rail damper (5a, 5b) as claimed in anyone of claims 1 to 5, wherein said cap (3) is fastened to said second end (30) of the cylinder casing (2) by interference fit, welding or glue, grove fit or any other like mean.

7. A rail damper (5a, 5b) as claimed in anyone of claims 1 to 6, wherein said rail damper (5a, 5b) is mounted to a rail web (12) by interference fit, welding, glue or screw thread.

## Patentansprüche

1. Schienendämpfer (5a, 5b) zum Montieren auf einer Schiene (6), um die Vibrationen zu dämpfen, umfassend:
- ein zylindrisches Dämpfergehäuse (2), das ein erstes Ende (20), ein zweites Ende (30) und eine Innenwand (40) aufweist;
- ein massives zylindrisches Element (1a), das das genannte erste Ende (20) des genannten zylindrischen Dämpfergehäuses (2) verschließt, wobei an dem festen genannten zylindrischen Element (1a) ein konzentrisches zylindrisches Element kleineren Durchmessers (1b) mit einer Außenwand (50) angebracht ist, um zum Aufnehmen eines Fluids eine Fluidkammer (4) zwischen der genannten Innenwand (40) des genannten zylindrischen Dämpfergehäuses (2) und der genannten Außenwand (50) zu bilden;
- eine Kappe (3), die das genannte zweite Ende (30) des Zylindergehäuses (2) verschließt, wobei die Kappe (3) auf leckagensichere Weise in einer wiederverschließbaren Art an dem genannten zweiten Ende (30) des Zylindergehäuses (2) angebracht ist.

2. Schienendämpfer (5a, 5b) nach Anspruch 1, wobei das genannte konzentrische zylindrische Element kleineren Durchmessers (1b) in das Fluid eingetaucht ist, das in der Fluidkammer (4) enthalten ist, die ein resonantes Element des Schienendämpfers (5a, 5b) bildet.

3. Schienendämpfer (5a, 5b) nach einem der Ansprüche 1 oder 2, wobei das genannte konzentrische zylindrische Element kleineren Durchmessers (1b) ein fester Stab oder ein hohles Rohr ist.

4. Schienendämpfer (5a, 5b) nach einem der Ansprüche 1 bis 3, wobei das genannte Fluid eine Viskosität von 1*10⁻⁵ bis 1*10² Pa*s aufweist, wenn gemessen bei Raumtemperatur.

5. Schienendämpfer (5a, 5b) nach einem der Ansprüche 1 bis 4, wobei die genannte Kappe (3) wiederverschließbare Löcher (60, 70) aufweist.

6. Schienendämpfer (5a, 5b) nach einem der Ansprüche 1 bis 5, wobei die genannte Kappe (3) durch Presspassung, Schweißen oder Klebstoff, Gravurpassung oder dergleichen an dem genannten zweiten Ende (30) des Zylindergehäuses (2) befestigt ist.

7. Schienendämpfer (5a, 5b) nach einem der Ansprüche 1 bis 6, wobei der genannte Schienendämpfer (5a, 5b) durch Presspassung, Schweißen, Klebstoff oder Schraubgewinde an einem Schienenstrang (12) montiert ist.

## Revendications

1. Amortisseur de rail (5a, 5b) destiné à être monté sur une voie ferrée (6) afin d'amortir les vibrations, comprenant :
un boîtier d'amortisseur cylindrique (2) ayant une première extrémité (20), une seconde extrémité (30) et une paroi interne (40) ;
un élément cylindrique plein (1a) fermant ladite première extrémité (20) dudit boîtier d'amortisseur cylindrique (2), dans lequel ledit élément cylindrique plein (1a) est fixé à un élément cylindrique concentrique de plus petit diamètre (1b) ayant une paroi externe (50) afin de former une chambre de fluide (4) entre ladite paroi interne (40) dudit boîtier d'amortisseur cylindrique (2) et ladite paroi externe (50) pour recevoir un fluide ;
un capuchon (3) fermant ladite seconde extrémité (30) du boîtier cylindrique (2), le capuchon (3) étant fixé d'une manière refermable à ladite seconde extrémité (30) du boîtier cylindrique (2) d'une manière étanche aux fuites.

2. Amortisseur de rail (5a, 5b) selon la revendication 1, dans lequel ledit élément cylindrique concentrique de plus petit diamètre (1b) est immergé dans le fluide contenu dans la chambre de fluide (4) constituant un élément résonant de l'amortisseur de rail (5a, 5b).

3. Amortisseur de rail (5a, 5b) selon l'une quelconque des revendications 1 ou 2, dans lequel ledit élément cylindrique concentrique de plus petit diamètre (1b) est une barre pleine ou un tube creux.

4. Amortisseur de rail (5a, 5b) selon l'une quelconque des revendications 1 à 3, dans lequel ledit fluide a une viscosité de 1*10⁻⁵ à 1*10² Pa*s, lorsqu'elle est mesurée à température ambiante.

5. Amortisseur de rail (5a, 5b) selon l'une quelconque des revendications 1 à 4, dans lequel ledit capuchon (3) a des trous refermables (60, 70).

6. Amortisseur de rail (5a, 5b) selon l'une quelconque des revendications 1 à 5, dans lequel ledit capuchon (3) est fixé à ladite seconde extrémité (30) du boîtier cylindrique (2) par ajustement serré, soudage ou collage, ajustement par rainure ou n'importe quel autre moyen similaire.

7. Amortisseur de rail (5a, 5b) selon l'une quelconque des revendications 1 à 6, dans lequel ledit amortisseur de rail (5a, 5b) est monté sur un réseau ferroviaire (12) par ajustement serré, soudage, collage ou filetage.
